# DEMANDE DE BREVET EUROPEEN

(11) **EP 3 656 591 A1**
(43) Date de publication de la demande: **27.05.2020**
(21) Numéro de dépôt: 19210335.6
(22) Date de dépôt: 20.11.2019
(51) Int. Cl.: B60J 1/02

(54) **PORTE DE VÉHICULE AVEC ÉLÉMENT SOUPLE DE FERMETURE**

(30) Priorité: 26.11.2018 FR 1871835
(71) Demandeur: RENAULT s.a.s., 92100 Boulogne-Billancourt (FR)
(72) Inventeur: CHEREAU, Pierre, 78114 MAGNY LES HAMEAUX (FR); LE-FERRAND, Yves, 78610 LE PERRAY EN YVELINES (FR)

(57) **Abrégé**

L'invention porte sur un élément de carrosserie (10) de véhicule automobile (1), notamment un ouvrant, comprenant :
- une structure (20) formant une ouverture (27) ;
- un élément souple (30) de fermeture de l'ouverture (27) ; et
- des moyens de fixation réversibles de l'élément souple (30) à la structure (20).

## Description

L'invention concerne un élément de carrosserie de véhicule automobile, en particulier un ouvrant, comprenant un élément souple. L'invention concerne aussi un véhicule automobile comprenant un tel élément de carrosserie.

Il est parfois difficile d'aérer correctement l'habitacle d'un véhicule, notamment l'espace ou volume au niveau d'un coffre d'un véhicule automobile, aussi bien lorsque le véhicule est à l'arrêt que lorsqu'il roule.

Le but de l'invention est de proposer un élément de carrosserie remédiant à cet inconvénient et améliorant les éléments connus de l'état de la technique. En particulier, l'invention permet de réaliser un élément de carrosserie simple et économique qui offre un accès à l'espace de chargement du coffre sans ouvrir la porte de coffre.

Pour atteindre cet objectif, l'invention porte sur un élément de carrosserie de véhicule automobile, notamment un ouvrant, comprenant :
- une structure formant une ouverture ;
- un élément souple de fermeture de l'ouverture ; et
- des moyens de fixation réversibles de l'élément souple à la structure.
L'élément souple peut être transparent ou sensiblement transparent. L'élément souple peut être au moins partiellement détachable de la structure.
Les moyens de fixation de l'élément souple à la structure peuvent comprendre un premier moyen de fixation fixé à l'élément souple et un deuxième moyen de fixation fixé à la structure.
Les moyens de fixation de l'élément souple à la structure peuvent comprendre un troisième moyen de fixation, notamment un troisième moyen comprenant au moins un curseur, apte à faire coopérer l'un avec l'autre les premier et deuxième moyen de fixation, le premier moyen de fixation pouvant être une première bande d'une fermeture à glissière, le deuxième moyen de fixation pouvant être une deuxième bande de la fermeture à glissière.
Le premier moyen de fixation peut s'étendre au niveau d'une partie d'un pourtour de l'élément souple, notamment au niveau d'une première arête supérieure transversale ou sensiblement transversale et au niveau de deux premières arêtes latérales, et/ou le deuxième moyen de fixation peut s'étendre au niveau d'une partie d'un pourtour de l'ouverture de la structure, notamment au niveau d'une deuxième arête supérieure transversale ou sensiblement transversale et au niveau de deux deuxièmes arêtes latérales.
La structure peut comprendre un moyen de maintien de l'élément souple partiellement détaché de la structure, notamment une sangle élastique agencée du côté habitacle de la structure, notamment une sangle élastique s'étendant transversalement ou sensiblement transversalement entre deux fixations agencées sur la structure ou sur une doublure intérieure de la structure.
La structure peut comprendre un support, notamment une vitre, au sein duquel est ménagée l'ouverture, le support pouvant comprendre le deuxième moyen de fixation de l'élément souple.
Le support peut être fixé sur la structure par collage.
L'invention porte encore sur un véhicule automobile comprenant un élément de carrosserie tel que défini précédemment.

Les figures annexées représentent, à titre d'exemple, un mode de réalisation d'un véhicule.
[Fig. 1] La figure 1 est une vue de côté d'un véhicule automobile selon un mode de réalisation de l'invention.
[Fig. 2] La figure 2 est une vue en perspective d'une porte de coffre depuis l'intérieur d'un habitacle du véhicule automobile selon le mode de réalisation de l'invention.
[Fig. 3] La figure 3 est une vue en perspective de la porte de coffre depuis l'intérieur de l'habitacle du véhicule automobile selon le mode de réalisation de l'invention, un élément souple étant partiellement détaché d'une structure de la porte de coffre.
[Fig. 4] La figure 4 est une section selon un plan transversal et longitudinal de la porte de coffre selon le mode de réalisation de l'invention.
[Fig. 5] La figure 5 est une vue partielle en perspective de la porte de coffre selon le mode de réalisation de l'invention.
[Fig. 6] La figure 6 est une vue en coupe selon un plan médian vertical et longitudinal de la porte de coffre selon le mode de réalisation de l'invention.

La direction selon laquelle le véhicule se déplace en ligne droite est définie comme étant la direction longitudinale X. Par convention, la direction perpendiculaire à la direction longitudinale X, située dans un plan parallèle au sol, est nommée direction transversale Y. La troisième direction, perpendiculaire aux deux autres, est nommée direction verticale Z.

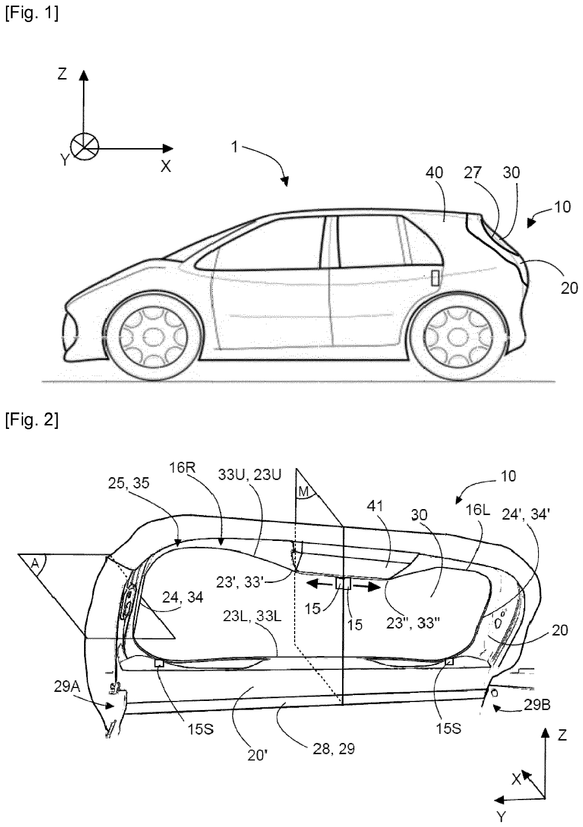

La figure 1 illustre un véhicule automobile 1 selon un mode de réalisation. Le véhicule automobile 1 comprend une carrosserie 40. Le véhicule automobile 1 comprend un élément de carrosserie 10, par exemple une partie de la carrosserie 40. De préférence, cet élément de carrosserie 10 est un ouvrant, en particulier une porte de coffre. De préférence encore, l'élément de carrosserie 10 est une porte de coffre de type hayon.

Comme illustré sur la figure 1, la porte de coffre 10 comprend une structure 20. La structure 20 est par exemple une tôle conformée ou encore un assemblage de plusieurs tôles conformées. La structure 20 comprend et/ou forme une ouverture 27.

Comme illustré sur les figures 1 et 2, la porte de coffre 10 comprend aussi un élément souple 30 de fermeture de l'ouverture 27, c'est-à-dire apte à obstruer l'ouverture 27. L'ouverture 27 n'est donc pas représentée sur la figure 2. La porte de coffre 10 comprend encore des moyens de fixation 25, 35 de l'élément souple 30 à la structure 20.

L'élément souple 30 est au minimum translucide, de préférence transparent ou sensiblement transparent. L'élément souple 30 peut également être teinté. Ainsi, l'ouverture 27 recouverte par l'élément souple 30 de la porte de coffre 10 permet par exemple au conducteur de visualiser derrière son véhicule par le biais d'un rétroviseur intérieur. En outre, une telle ouverture 27 recouverte par l'élément souple 30 apporte de la lumière au sein de l'habitacle.

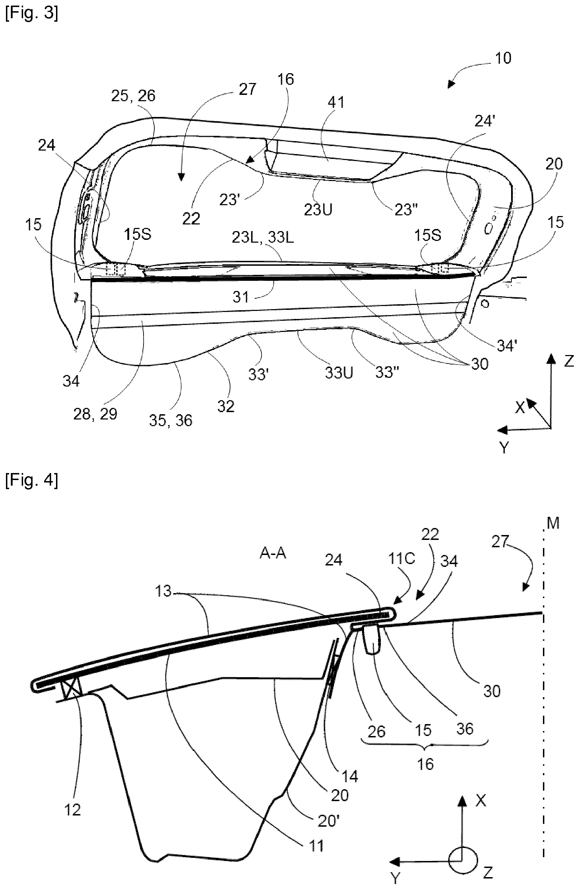

Comme illustré sur la figure 3, l'élément souple 30 est au moins partiellement détachable de la structure 20. En effet, de préférence les moyens de fixation 25, 35 de l'élément souple 30 à la structure 20 permettent de détacher l'élément souple 30 de la structure 20 seulement partiellement. Autrement dit, l'élément souple 30 reste continuellement attaché à la structure 20.

Ainsi, sur la figure 2, l'élément souple 30 obstrue intégralement l'ouverture 27 alors que sur la figure 3 l'élément souple 30 découvre l'ouverture 27 tout en étant détaché partiellement de la structure 20 comme il sera expliqué par la suite.

Alternativement, les moyens de fixations 25, 35 peuvent permettre de détacher intégralement l'élément souple 30 de la structure 20, c'est-à-dire de la porte de coffre 10.

Les moyens de fixation 25, 35 comprennent un premier moyen de fixation 35 fixé à l'élément souple 30 et un deuxième moyen de fixation 25 fixé à la structure 20. De préférence, comme illustré sur les figures 2 et 3, les moyens de fixation 25, 35 de l'élément souple 30 à la structure 20 comprennent un troisième moyen de fixation 15 apte à faire coopérer l'un avec l'autre les premier et deuxième moyen de fixation 25, 35. Ce troisième moyen de fixation 15 comprend par exemple au moins un curseur. Dans ce cas, de préférence, le premier moyen de fixation 35 est une première bande 36 d'une fermeture à glissière 16 et le deuxième moyen de fixation 25 est une deuxième bande 26 de la fermeture à glissière 16.

De préférence, comme illustré sur les figures 2 et 3, la première bande 36 de fermeture à glissière 16 s'étend au niveau d'une partie d'un pourtour 32 de l'élément souple 30. En particulier, la première bande 36 de fermeture à glissière 16 s'étend au niveau d'une partie comprenant une première arête supérieure 33U transversale ou sensiblement transversale et deux premières arêtes latérales 34, 34'. De préférence également, la deuxième bande 26 de la fermeture à glissière 16 s'étend au niveau d'une partie d'un pourtour 22 de l'ouverture 27 de la structure 20. En particulier, la deuxième bande 26 de fermeture à glissière 16 s'étend au niveau d'une partie comprenant une deuxième arête supérieure 23U transversale ou sensiblement transversale et deux deuxièmes arêtes latérales 24, 24'. A noter que le, ou de préférence, deux curseurs 15, de la fermeture à glissière 16 sont accessibles uniquement de l'intérieur, depuis l'habitacle du véhicule automobile 1. Ainsi chaque tirette de chaque curseur 15, agencée en liaison pivot ou sensiblement en liaison pivot par rapport à chaque curseur 15 par exemple, est accessible dans l'habitacle. Evidemment chaque tirette peut être accessible depuis l'extérieur du véhicule lorsque la porte de coffre 10 est dans une position ouverte (non illustrée), obtenue par exemple par rotation autour d'un axe horizontal et transversal par rapport à la carrosserie 40.

Ainsi, la deuxième bande 26 s'étend sur l'ensemble du pourtour 22 de l'ouverture 27 excepté une arête transversale inférieure 23L ou sensiblement. De la même manière, la première bande 36 s'étend sur l'ensemble du pourtour 32 de l'élément souple 30 excepté une arête transversale inférieure 33L ou sensiblement. En conséquence, lorsque les premier et deuxième moyens de fixation 35, 25 sont désolidarisés, autrement dit que les première et deuxième bandes 36, 26 de la fermeture à glissière 16 sont détachées l'une de l'autre, l'élément souple 30 ne tient qu'au niveau des arêtes transversales inférieures 23L, 33L ou sensiblement à ce niveau. En effet, les arêtes transversales inférieures 23L, 33L sont dépourvues de bande de la fermeture à glissière 16. Avantageusement deux butées 15S sont agencées de part et d'autre des arêtes transversales inférieures 23L, 33L et assurent la fin de course des curseurs 15. Ainsi, une fois les curseurs 15 au contact ou à proximité des butées 15S, l'élément souple 30 est en configuration détachée tout en restant maintenu le long des arêtes transversales inférieures 23L, 33L.

Alternativement, il peut être envisagé que l'élément souple ne soit tenu qu'au niveau de l'arête transversale supérieure ou sensiblement en configuration détachée. Dans ce cas, les arêtes transversales inférieures sont munies de moyen de fixation entre l'élément souple et la structure alors que les arêtes transversales supérieures ne le sont pas. Alternativement encore, il peut être envisagé que seules les arêtes latérales, ou sensiblement les arêtes latérales, soient dotées d'un moyen de fixation entre l'élément souple et la structure. Dans ce cas, seules deux ouïes latérales sont créées lors du passage en configuration détachée de l'élément souple.

Alternativement encore, le premier moyen de fixation 35 comprend des fixations males, respectivement des fixations femelles, le deuxième moyen de fixation 25 comprenant des fixations femelles, respectivement des fixations males. Les fixations males sont alors aptes à s'enficher ou se clipper ou se clipser dans les fixations femelles. Il peut par exemple s'agir de boutons pression.

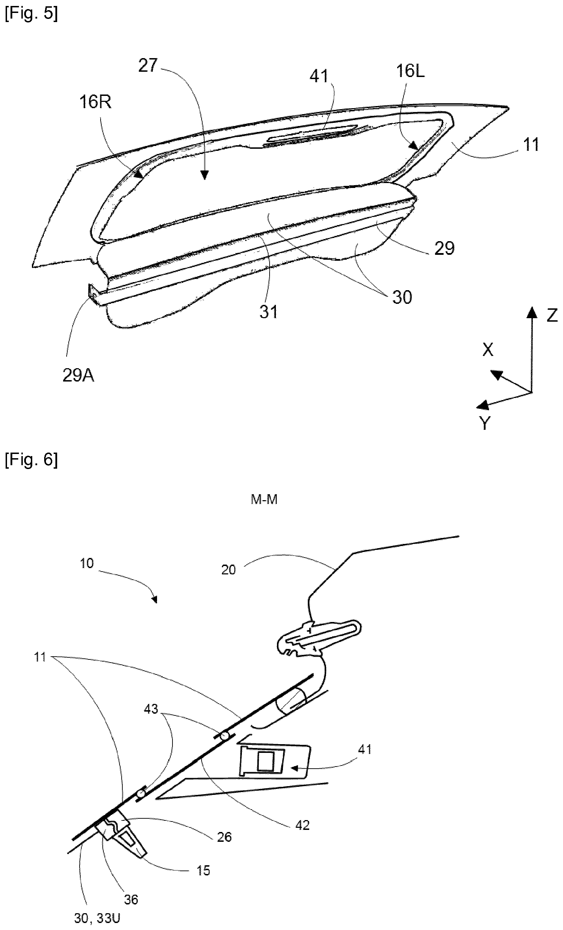

De préférence, la souplesse de l'élément souple 30 est telle qu'elle lui permet d'épouser la structure 20 ou l'éventuel habillage intérieur ou doublure 20' de la partie inférieure intérieure du hayon 10 dans la configuration détachée. Ainsi, comme illustré sur les figures 3 et 5, un pli 31, par exemple de l'ordre de 90 degrés, se forme lorsque l'élément souple 30 est en configuration détachée. Evidemment, davantage de plis peuvent se former suivant la forme de la structure 20 et/ou de la doublure 20'.

Comme illustré en particulier sur les figures 2 et 3, les première et deuxième arêtes supérieures 33U, 23U peuvent présenter respectivement un ou plusieurs décrochements 33', 33", 23', 23" de sorte à contourner ou contourner sensiblement un troisième feu stop 41 ou un boîtier comprenant un troisième feu stop 41 ou encore une vitre 42 de feu stop comme illustrée sur la figure 6.

La structure 20 comprend de préférence un moyen de maintien 28 de l'élément souple 30, comme illustré sur les figures 2, 3 et 5. Ceci afin de maintenir l'élément souple 30 lorsque l'élément souple 30 est en configuration détachée. Le moyen de maintien 28 est par exemple une sangle élastique 29 agencée du côté habitacle de la structure 20 (hayon 10 est en position fermé). De préférence, la sangle élastique 29 s'étend transversalement ou sensiblement transversalement entre deux fixations 29A, 29B fixées sur la structure 20. Alternativement, les deux fixations 29A, 29B sont fixées sur la doublure intérieure 20' de la structure 20. Les deux fixations 29A, 29B sont par exemple des pions cylindriques ou encore des vis. La sangle élastique 29 est par exemple pincée et/ou traversée par les fixations 29A, 29B. Dans une variante les fixations 29A, 29B sont venues de matière de la doublure intérieure 20' et/ou de la structure 20. Quoi qu'il en soit, l'élément souple 30 en configuration détachée peut être glissé, pincé, pris en sandwich, plaqué entre la sangle 29 et la doublure ou garniture 20' et/ou la structure 20. Grâce à ce maintien par la sangle 29, même à vitesse élevée du véhicule automobile, notamment vitres avant et/ou arrière ouvertes, l'élément souple 30 n'est pas trop soumis aux turbulences et n'est pas entraîné vers l'extérieur. Autrement dit l'élément souple 30 bloqué par la sangle 29 ne passe pas par l'ouverture 27 et ne se déplie pas vers l'extérieur de l'habitacle.

Alternativement, un autre moyen de maintien est prévu pour maintenir l'élément souple 30 vers l'intérieur de l'habitacle en configuration détachée. Par exemple, des moyens de maintien fixés d'une part sur l'élément souple 30 et d'autre part sur la structure 20 sont agencés pour coopérer en configuration détachée. Il peut s'agir par exemple de boutons pression ou encore de bandes autoagrippantes ou encore de clips.

Avantageusement, comme illustré en particulier sur la figure 4, la structure 20 comprend un support ou cadre 11 au sein duquel est ménagée l'ouverture 27. Le support 11 comprend alors le deuxième moyen de fixation 25 de l'élément souple 30, par exemple la deuxième bande 26 de la fermeture à glissière 16. Le support 11 est par exemple en verre, par exemple en verre transparent ou sensiblement transparent, ou encore en verre opaque c'est-à-dire non translucide. Il peut être réalisé en matériau plastique ou en polycarbonate. Avantageusement le support 11 est en tôle, en métal, par exemple en acier. De préférence, le support 11 est rigide. Avantageusement, comme illustré sur la figure 6, le troisième feu stop 41 est agencé sur le support 11. Le support 11 supporte alors la vitre 42 ou une partie transparente destinée à l'intégration du troisième feu stop 41. Par exemple la vitre 42 est fixée par collage, via un cordon 43 par exemple, à l'intérieur du support 11. Comme illustré sur la figure 4 en particulier, de préférence, le support 11 est fixé sur la structure 20 par collage, par exemple via un cordon de colle 12 de manière à assurer l'étanchéité entre le support et la structure. De préférence, un revêtement souple 13, par exemple une toile, est agencée pour recouvrir le support 11 et venir rejoindre la structure 20 côté habitacle ou, le cas échéant, la doublure 20' de la porte de coffre. De préférence le revêtement 13 a la surface intérieure pré encollée au niveau d'extrémités qui sont rabattues vers l'intérieur du support 11. Par exemple, une attache 14 amovible assure la fixation entre la toile 13 et la structure 20 et/ou la doublure 20' au niveau du pourtour 22 de l'ouverture 27. Cette attache 14 comprend par exemple des bandes et/ou rubans et/ou fermetures autoagrippantes par exemple de type Velcro (marque déposée). Grâce à cette toile 13 maintenue par l'attache 14, le support 11 n'est pas visible depuis l'habitacle. De préférence, une bordure ou bord 11C du support 11, ou de la structure 20 en l'absence de support 11, a un profil sensiblement en U inversé qui longe en partie ou en totalité le pourtour de l'élément souple 30 et cache ainsi la fermeture à glissière 16, ainsi que les curseurs 15, notamment lorsque l'élément souple est en configuration détachée. Ce bord 11C reçoit ainsi la deuxième bande 26 de la fermeture 16 alors que le pourtour de l'élément souple 30 au niveau des arêtes latérales 34, 34' et de l'arête supérieure transversale 33U reçoit la première bande 36.

Grâce à l'élément souple 30 équipant le hayon 10, il est aisé d'aérer ou ventiler l'espace du coffre aussi bien à l'arrêt qu'en roulant. En outre il est possible d'accéder à l'espace du coffre, par exemple pour charger ou décharger le coffre sans ouvrir le hayon 10.

En résumé, l'élément souple 30 de type lunette arrière souple, de préférence transparent, est monté sur la porte de coffre 10, de préférence via le support 11 rigide.

Le support 11 est fixé à demeure sur la structure 20 de hayon 10. Le support 11 vient à recouvrement de la structure 20 et fait office de masque puisque le support 11 comprend l'ouverture 27. Le support 11 comprend également un masque intérieur, le revêtement souple 13, fixé par l'attache 14 de préférence à la doublure 20' de la structure 20 du hayon 10. Ce masque intérieur recouvre au moins en partie le support 11, sans quoi le support 11 serait visible de l'intérieur du véhicule.

Bien que l'élément souple 30 soit fixé sur un cadre de hayon 10, il peut se détacher, en particulier partiellement, découvrant plus ou moins l'ouverture 27. Ainsi, l'élément souple 30 de type « vitre souple », de préférence non démontable intégralement de la structure 20 et/ou du support 11, est fixé par les zones supérieures et latérales. De préférence, une fermeture à glissière 16, de préférence de type « zip » étanche ou fermeture Eclair (marque déposée), comprend une partie côté droit 16R et une partie côté gauche 16L comme illustré sur les figures 2 et 5. Par exemple, la partie côté droit 16R s'étend du côté droit depuis ou sensiblement depuis le plan médian vertical et longitudinal M alors que la partie gauche 16L s'étend du côté gauche depuis ou sensiblement depuis ce plan M. Ainsi les arêtes 33U, 34, 34' de l'élément souple 30 sont tenues aux arêtes 23U, 24, 24' de la structure 20 et/ou du support 11 par la fermeture à glissière 16 lorsque l'élément souple 30 ferme l'ouverture 27.

Ainsi, lorsque l'élément souple 30 est attaché intégralement, fermé, autrement dit ouverture 27 obstruée intégralement par l'élément souple 30 comme illustré sur la figure 2, on peut commencer à découvrir l'ouverture 27. Pour cela, les deux curseurs 15, de préférence un à droite et l'autre à gauche ou sensiblement par rapport au plan médian M, sont déplacés, par exemple manuellement. Le curseur de droite est déplacé transversalement vers la droite le long de la partie droite 16R, et le curseur de gauche est déplacé transversalement vers la gauche le long de la partie gauche 16L. Ces actions peuvent se faire simultanément ou successivement. Une fois les arêtes longitudinales supérieures 23U, 33U parcourues, les curseurs 15 sont ensuite entraînés, par exemple manuellement, côté droit le long des arêtes latérales 24, 34 et côté gauche le long des arêtes latérales 24' 34', et ce jusqu'au butées 15S. Là encore, ces actions peuvent se faire simultanément ou successivement.

Evidemment, comme illustré sur les figures 2, 3 et 5, les passages des arêtes supérieures longitudinales 23U, 33U aux arêtes latérales 24, 24', 34, 34' se font via des courbes et non des angles droits pour ce mode de réalisation à fermeture à glissière 16 avec curseurs 15.

Une fois les curseurs 15 en butée contre les butée 15S ou à proximité des butées 15S, l'élément souple 30 découvre l'ouverture 37. En effet, l'élément 30 est ici en configuration détachée. L'élément souple 30 peut se rabattre alors, par exemple sous l'effet de son poids, et épouser ou épouser sensiblement la structure 20 et/ou la doublure intérieure 20' le cas échéant. Avantageusement, comme évoqué précédemment, la sangle 29 maintient l'élément souple 30 rabattu vers l'intérieur de l'habitacle.

Pour refermer l'ouverture 27, il suffit de déplacer les curseurs 15 depuis leurs butées 15S, de préférence jusqu'au plan médian M ou sensiblement, jusqu'à ce que les curseurs viennent au contact l'un de l'autre.

Comme évoqué, la partie rigide externe du support 11 comprend la bordure 11C qui couvre le mécanisme d'ouverture, à savoir les curseurs 15 et les première et deuxième bandes 36, 26. Ainsi le mécanisme d'ouverture n'est pas accessible depuis l'extérieur du véhicule automobile 1 lorsque la porte de coffre 10 est fermée et que l'élément souple 30 obstrue l'ouverture 27. Le mécanisme est alors inviolable.

En remarque, la solution selon l'invention atteint donc l'objet recherché de permettre d'aérer le coffre aussi bien à l'arrêt qu'en roulant et de rendre possible d'accéder au chargement du coffre sans ouvrir la porte de coffre et présente les avantages suivants :
- elle est simple à mettre en œuvre et par conséquent économique ;
- elle est aisément adaptable sur les portes de coffre à lunette en verre, le support 11 pouvant se fixer directement en lieu et place de la lunette en verre.

## Revendications

1. Elément de carrosserie (10) de véhicule automobile (1), notamment ouvrant, comprenant :
- une structure (20) formant une ouverture (27) ;
- un élément souple (30) de fermeture de l'ouverture (27) ; et
- des moyens de fixation (25, 35) réversibles de l'élément souple (30) à la structure (20).

2. Elément de carrosserie (10) selon la revendication 1, **caractérisé en ce que** l'élément souple (30) est transparent ou sensiblement transparent.

3. Elément de carrosserie (10) selon l'une des revendications précédentes, **caractérisé en ce que** l'élément souple (30) est au moins partiellement détachable de la structure (20).

4. Elément de carrosserie (10) selon l'une des revendications précédentes, **caractérisé en ce que** les moyens de fixation (25, 35) de l'élément souple (30) à la structure (20) comprennent un premier moyen de fixation (35) fixé à l'élément souple (30) et un deuxième moyen de fixation (25) fixé à la structure (20).

5. Elément de carrosserie (10) selon la revendication précédente, **caractérisé en ce que** les moyens de fixation (25, 35) de l'élément souple (30) à la structure (20) comprennent un troisième moyen de fixation (15), notamment un troisième moyen comprenant au moins un curseur, apte à faire coopérer l'un avec l'autre les premier et deuxième moyen de fixation (25, 35),
et **en ce que** le premier moyen de fixation (35) est une première bande (36) d'une fermeture à glissière (16),
et **en ce que** le deuxième moyen de fixation (25) est une deuxième bande (26) de la fermeture à glissière (16).

6. Elément de carrosserie (10) selon l'une des revendications 4 et 5, **caractérisé en ce que** le premier moyen de fixation (35) s'étend au niveau d'une partie d'un pourtour (32) de l'élément souple (30), notamment au niveau d'une première arête supérieure (33U) transversale ou sensiblement transversale et au niveau de deux premières arêtes latérales (34, 34'), et/ou
**en ce que** le deuxième moyen de fixation (25) s'étend au niveau d'une partie d'un pourtour (22) de l'ouverture (27) de la structure (20), notamment au niveau d'une deuxième arête supérieure (23U) transversale ou sensiblement transversale et au niveau de deux deuxièmes arêtes latérales (24, 24').

7. Elément de carrosserie (10) selon l'une des revendications précédentes, **caractérisé en ce que** la structure (20) comprend un moyen de maintien (28) de l'élément souple (30) partiellement détaché de la structure (20), notamment une sangle élastique (29) agencée du côté habitacle de la structure (20), notamment une sangle élastique (29) s'étendant transversalement ou sensiblement transversalement entre deux fixations (29A, 29B) agencées sur la structure (20) ou sur une doublure intérieure (20') de la structure (20).

8. Elément de carrosserie (10) selon l'une des revendications précédentes, **caractérisé en ce que** la structure (20) comprend un support (11), notamment une vitre, au sein duquel est ménagée l'ouverture (27) et **en ce que** le support (11) comprend le deuxième moyen de fixation (25) de l'élément souple (30).

9. Elément de carrosserie (10) selon la revendication précédente, **caractérisé en ce que** le support (11) est fixé sur la structure (20) par collage.

10. Véhicule automobile (1), **caractérisé en ce qu'**il comprend un élément de carrosserie (10) selon l'une des revendications précédentes.
